# EUROPÄISCHE PATENTSCHRIFT

(11) **EP 4 272 978 B1**
(45) Veröffentlichungstag und Bekanntmachung des Hinweises auf die Patenterteilung: **19.11.2025**
(21) Anmeldenummer: 23162763.9
(22) Anmeldetag: 20.03.2023
(51) Int. Cl.: B60C 15/06, B60C 15/024, B60C 13/00

(54) **FAHRZEUGLUFTREIFEN UND FAHRZEUGRAD**
PNEUMATIC VEHICLE TIRE AND VEHICLE WHEEL
PNEU DE VÉHICULE ET ROUE DE VÉHICULE

(30) Priorität: 06.05.2022 DE 102022204475
(43) Veröffentlichungstag der Anmeldung: 08.11.2023
(73) Patentinhaber: Continental Reifen Deutschland GmbH, 30175 Hannover (DE)
(72) Erfinder: Fischer, Markus, 30165 Hannover (DE); Fernandes de Alencar, Maria Izabel, 30165 Hannover (DE); Metge, Axel, 30165 Hannover (DE)
(74) Vertreter: Continental Corporation

(56) Entgegenhaltungen:
- WO-A1-2021/149388
- JP-A- 2004 182 021
- JP-A- 2007 045 333
- JP-A- 2016 078 564
- JP-A- 2018 095 135

## Beschreibung

Die Erfindung betrifft einen Fahrzeugluftreifen mit einem Laufstreifen und zwei in Wulstbereichen endenden Seitenwänden sowie einer radial unterhalb des Laufstreifens und entlang der Seitenwände verlaufenden und die Wulstbereiche umschlingenden Karkasse, wobei die Wulstbereiche einen Kern und einen in radialer Richtung auswärts des Kerns anschließenden Apex umfassen und der Fahrzeugluftreifen zur Montage auf eine Felge mit einem gekrümmten Felgenhornbereich geeignet ist.

Fahrzeugluftreifen der eingangs genannten Art sind bekannt und werden beispielsweise für PKWs sowie Transporter in verschiedenster Ausführung hergestellt. Insbesondere Fahrzeugluftreifen mit hoher Auslastung und entsprechend hoher Tragfähigkeit, die beispielsweise im kommerziellen Transporterbereich eingesetzt werden, sind häufig mit Verstärkungselementen im Bereich des Wulstes ausgestattet, um der erhöhten Belastung Rechnung zu tragen. Diese können zum Beispiel Gewebestreifen sein, die einen Winkelverband mit der Karkasse bilden. Auch sind zusätzliche Karkasslagen im Wulstbereich sowie die Anordnung dicker Gummibauteile im Wulst bekannt. Als Folge wird die Bewegung des Fahrzeugluftreifens im Bereich des Wulstes reduziert und dessen Haltbarkeit verbessert. Darüber hinaus sind spezielle Seitenwandkonstruktionen bekannt, um die Robustheit des Reifens zu erhöhen. Allerdings geht die Anordnung von Verstärkungselementen, insbesondere in Form steiferer Materialien, dickerer Polsterung und aufwändigerer Konstruktionen stets mit Nachteilen im Rollwiderstand, Komfort und höheren Materialkosten einher.

Aus der JP 2016 078564 A ist ein Fahrzeugluftreifen mit einem Außenapex bekannt, der einen komplexen E-Modul von 15-75 MPa aufweist.

Weitere Ausführungsformen von Fahrzeugluftreifen mit einem Außenapex sind Gegenstand der JP 2007 045 333 A, JP 2004 182021 A, JP 2018 095135 A und der WO 2021/149388 A1.

Aufgabe der Erfindung ist es daher, einen Fahrzeugluftreifen der eingangs genannten Art vorzuschlagen, der bei erheblich verbessertem Rollwiderstand eine deutlich höhere Wulsthaltbarkeit und entsprechende Belastbarkeit zum Beispiel für Anwendungen im Transporterbereich aufweist.

Zur Lösung der gestellten Aufgabe wird erfindungsgemäß die Ausgestaltung eines Fahrzeugluftreifens gemäß den Merkmalen des Patentanspruchs 1 vorgeschlagen.

Vorteilhafte Ausgestaltungen und Weiterbildungen der Erfindung sind Gegenstand der abhängigen Ansprüche.

Erfindungsgemäß wird vorgeschlagen, dass in der Seitenwand axial benachbart zum Apex ein aus einem Gummistreifen gebildeter Außenapex mit einer Shore-Härte A nach ASTM D 2240 von 60 bis 88 und einem dynamischen E-Modul von 8 bis 12 N/mm² sowie einer Rückprallelastizität nach **DIN** 53512 von 60 bis 85 % bei Raumtemperatur und von 65 bis 90 % bei einer Temperatur von 70 °C angeordnet ist.

Der erfindungsgemäß axial benachbart zum Apex in der Seitenwand angeordnete Außenapex ist aufgrund der ausgewählten mechanischen Eigenschaften des verwendeten Gummimaterials speziell im Hinblick auf den Zielkonflikt Steifigkeit / Dauerhaltbarkeit / Hystereseverluste optimiert und bietet einen signifikant verbesserten Rollwiderstand unter Beibehaltung der gewünschten hohen Tragfähigkeit, Überlastfähigkeit, Robustheit und Wulsthaltbarkeit.

Durch die erfindungsgemäße Ausgestaltung des in der Seitenwand angeordneten Außenapex wird ein mehrschichtiger Seitenwandaufbau erreicht, der sich durch signifikant veränderte Eigenschaften je nach Anforderungsprofil des Fahrzeugluftreifens auszeichnet. Beispielsweise kann der Außenapex eine erhöhte Steifigkeit gegenüber dem Material der Seitenwand aufweisen und damit eine besonders hohe Stützwirkung im Wulstbereich bieten. Auch kann der Außenapex je nach Einstellung des für die Ausbildung des Außenapex verwendeten Gummimaterials eine geringere Hysterese aufweisen und den Rollwiderstand des Fahrzeugluftreifens verbessern.

Bevorzugt wird zur Ausbildung des Außenapex ein Gummistreifen mit einer Shore-Härte A nach ASTM D 2240 von 68 bis 78 und einem dynamischen E-Modul von 9 bis 11 N/mm² sowie einer Rückprallelastizität nach DIN 53512 von 68 bis 78 % bei Raumtemperatur und von 71 bis 83 % bei einer Temperatur von 70 °C vorgesehen.

Nach einem Vorschlag der Erfindung weist der der Außenapex zur Optimierung der Festigkeitseigenschaften bei Raumtemperatur eine Reißfestigkeit nach DIN 53504 von 3,5 bis 10 N/mm² und eine Reißdehnung nach DIN 53504 von 60 bis 200 % und bei einer Temperatur von 70 °C eine Reißfestigkeit nach DIN 53504 von 3 bis 8 N/mm² und eine Reißdehnung nach DIN 53504 von 45 bis 190 % auf. Vorzugsweise wird eine Reißfestigkeit nach DIN 53504 von 4,5 bis 8 N/mm² und eine Reißdehnung nach DIN 53504 von 70 bis 150 %, jeweils bei Raumtemperatur und eine Reißfestigkeit nach DIN 53504 von 4 bis 7 N/mm² und eine Reißdehnung nach DIN 53504 von 80 bis 120 % jeweils bei einer Temperatur von 70 °C vorgesehen.

Darüber hinaus sieht ein weiterer Vorschlag der Erfindung vor, dass der Außenapex bei Raumtemperatur eine Energiedichte beim Bruch nach DIN 53504 von 1,5 bis 5 J/cm³, vorzugsweise 2 bis 3,5 J/cm³ und bei einer Temperatur von 70 °C eine Energiedichte beim Bruch nach DIN 53504 von 1 bis 5 J/cm³, vorzugsweise 1,5 bis 3,2 J/cm³ aufweist.

Nach einem weiteren Vorschlag der Erfindung ist der Außenapex im montierten Zustand des Fahrzeugluftreifens auf der Felge zumindest teilweise in radialer Richtung oberhalb des Felgenhornbereichs in der Seitenwand angeordnet, um den Seitenwandbereich lokal zu modifizieren, wo auch die höchsten Kräfte zu erwarten sind.

Die Seitenwände des erfindungsgemäßen Fahrzeugluftreifens können nach einem weiteren Vorschlag der Erfindung aus einem Gummimaterial mit einer Shore-Härte A nach ASTM D 2240 von 40 bis 60, vorzugsweise 45 bis 55, und einem dynamischen E-Modul von 3 bis 6 N/mm², vorzugsweise 4 bis 5 N/mm², sowie einer Rückprallelastizität nach DIN 53512 von 45 bis 75 %, vorzugsweise 50 bis 67 % bei Raumtemperatur und einer Reißfestigkeit nach DIN 53504 von 6 bis 15 N/mm², vorzugsweise 8 bis 13 N/mm² und eine Reißdehnung nach **DIN** 53504 von 400 bis 600 %, vorzugsweise 450 bis 550 %, jeweils bei Raumtemperatur gebildet sein.

Nach einem weiteren Vorschlag der Erfindung kann in radialer Richtung unterhalb des Wulstbereiches und der Felge zugewandt ein in die Seitenwand übergehender Felgenstreifen, ein sogenannter Rim Strip, vorgesehen sein. Dieser ist erfindungsgemäß aus einem Gummimaterial mit einer Shore-Härte A nach ASTM D 2240 von 65 bis 85, vorzugsweise 70 bis 80 und einer Rückprallelastizität nach DIN 53512 von 34 bis 65 %, vorzugsweise 36 bis 60 % bei Raumtemperatur und 50 bis 70 %, vorzugsweise 55 bis 70 % bei einer Temperatur von 70 °C sowie einer Reißfestigkeit nach **DIN** 53504 von 10 bis 16 N/mm², vorzugsweise 11 bis 14 N/mm² und einer Reißdehnung nach **DIN** 53504 von 160 bis 275 %, vorzugsweise 170 bis 260 %, jeweils bei Raumtemperatur, gebildet.

Die Erfindung schlägt weiterhin vor, dass zur weiteren Verstärkung der Seitenwandbereiche die Karkasse mit ihrem den Wulstbereich umschlingenden Ende in radialer Richtung des Fahrzeugluftreifens das radial äußere Ende des Apex und des Außenapex überragt. Es versteht sich, dass zwischen Apex und Außenapex auch noch weitere Karkasslagen vorgesehen sein können.

Eine weitere Steigerung der Seitenwandstabilität bei geringem Rollwiderstand wird dadurch erreicht, dass nach einem weiteren Vorschlag der Erfindung axial außenseitig zumindest auf einer Seitenwand und/oder dem Felgenstreifen eine über den Umfang derselben vorstehende und umlaufende Wulstlippe ausgebildet ist, die eine Wulstlippenoberfläche aufweist, welche in montiertem Zustand des Fahrzeugluftreifens auf der Felge zur Auflage auf dem gekrümmten Felgenhornbereich bestimmt ist.

Die auf dem Felgenhornbereich zur Auflage kommende Wulstlippe bewirkt eine formschlüssige Abstützung des Seitenwandbereichs im Übergang zum Wulstbereich auf dem Felgenhorn, wobei gleichzeitig dieser Bereich der Seitenwand durch den integrierten Außenapex verstärkt und/oder in seinen Eigenschaften modifiziert wird. Im Ergebnis zeigt sich somit eine Festigkeit und Stützwirkung der Seitenwand, so dass auf üblicherweise eingelegte Gewebestreifen zur Erhöhung der Belastbarkeit und Tragfähigkeit verzichtet werden kann. Nachteile in Bezug auf Rollwiderstand und Materialkosten werden somit reduziert, ohne Einbußen bei der Wulsthaltbarkeit hinnehmen zu müssen.

Nach einem weiteren Vorschlag der Erfindung erstreckt sich der Außenapex in radialer Richtung des Fahrzeugluftreifens betrachtet von einem unterhalb der Wulstlippe befindlichen Bereich bis in einen oberhalb der Wulstlippe befindlichen Bereich entlang der Seitenwand und/oder des Felgenstreifens, um die Seitenwand des Fahrzeugluftreifens in diesem hoch belasteten Bereich optimal zu verstärken.

Vorzugsweise ist die Wulstlippe des Fahrzeugluftreifens so angeordnet, dass die Wulstlippenoberfläche in montierten Zustand des Fahrzeugluftreifens auf der Felge umlaufend auf dem Felgenhornbereich zur Anlage kommt, wobei insbesondere ein leichter Presssitz der Wulstlippenoberfläche auf den Felgenhornbereich bevorzugt ist, um eine zuverlässige Abdichtung und formschlüssige Abstützung sicherzustellen.

Insbesondere kann die Wulstlippenoberfläche von einer Reifenaußenseite her betrachtet konkav gekrümmt sein und einen Krümmungsradius aufweisen, der geringfügig kleiner als der Krümmungsradius des Felgenhornbereichs ist, sodass sich in unmontiertem Zustand zwischen der Wulstlippe im Bereich der Wulstlippenoberfläche und des gekrümmten Felgenhorns eine Überschneidung bildet, die bei auf der Felge montiertem Fahrzeugluftreifen die gewünschte Presspassung ermöglicht.

Gegenstand der Erfindung ist ferner auch ein Fahrzeugrad mit einem auf einer Felge montierten Fahrzeugluftreifen gemäß der Erfindung, wie vorangehend beschrieben.

Weitere Ausgestaltungen und Einzelheiten der Erfindung werden nachfolgend anhand der ein Ausführungsbeispiel darstellende Zeichnung erläutert. Es zeigen:
- Figur 1: in schematisierten Darstellung einen Teilschnitt durch einen erfindungsgemäßen Fahrzeugluftreifen;
- Figur 2: eine vergrößerte Darstellung des Seitenwand- und Wulstbereiches des Fahrzeugluftreifens gemäß Figur 1 in einer ersten Ausführungsform;
- Figur 3: eine vergrößerte Darstellung des Seitenwand- und Wulstbereiches des Fahrzeugluftreifens gemäß Figur 1 in einer zweiten Ausführungsform.

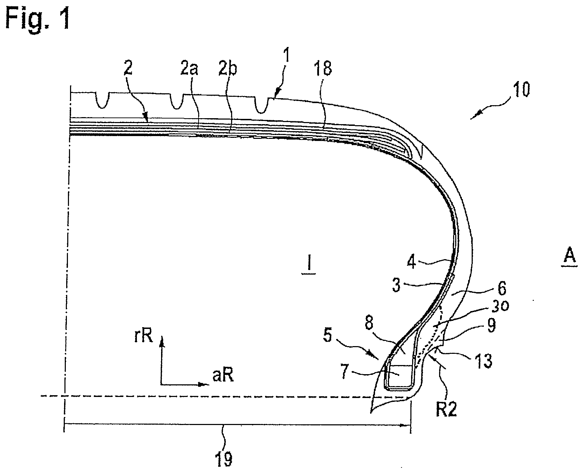

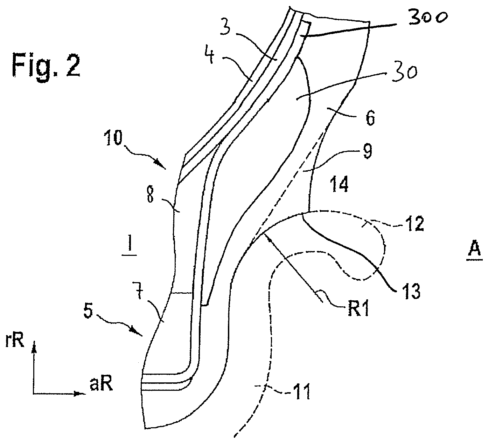

Die Figur 1 zeigt einen Teil-Querschnitt durch einen als Radialreifen ausgebildeten Fahrzeugluftreifen 10, welcher einen profilierten Laufstreifen 1, einen aus zwei Lagen 2a, 2b bestehenden Gürtel 2, welcher durch eine Bandage 18 abgedeckt ist, eine Radialkarkasse 3, eine luftdicht ausgeführte Innenschicht 4, Seitenwände 6 sowie den Wulstbereich 5 mit Kernen 7 und Apex 8 aufweist. Die Seitenwände 6 enden dabei radial innenseitig des Laufstreifens 1 in den Wulstbereichen 5. Der solchermaßen ausgebildete Fahrzeugluftreifen 10 ist geeignet zur Montage auf einer Felge 11 mit einem gekrümmten Felgenhornbereich 12 eines Felgenhornradius R1 von mindestens 9,5 mm, siehe Figur 2.

Am Fahrzeugluftreifen 10 ist optional axial im Bereich der Reifenaußenseite A zumindest auf einer Seitenwand 6 eine über den Umfang der Seitenwand 6 umlaufende Wulstlippe 9 angeordnet. Diese Wulstlippe 9 weist axial zur Reifenaußenseite A vorstehend eine Wulstlippenoberfläche 13 auf, die im dargestellten Ausführungsbeispiel umlaufend und durchgängig zur Auflage auf dem gekrümmten Felgenhornbereich 12 bestimmt ist. Die Wulstlippenoberfläche 13 ist dazu von der Reifenaußenseite A her betrachtet konkav gekrümmt und weist einen Krümmungsradius R2 auf, der kleiner als der Krümmungsradius R1 des Felgenhornbereichs 12 ausgebildet ist, d. h. der Krümmungsradius R2 ist kleiner als 9,5 mm ausgebildet. Der Fachmann wird jedoch erkennen, dass der Fahrzeugluftreifen gleichermaßen auch ohne Wulstlippe 9 ausgeführt sein kann.

Es kann sich beim dargestellten Fahrzeugluftreifen 10 beispielsweise um einen Radialreifen erhöhter Tragfähigkeit mit entsprechendem Tragfähigkeitsindex für einen Transporter handeln.

Die Wulstlippenoberfläche 13 weist einen Kreisbogen 14 mit einem Krümmungsradius R2 kleiner 9,5 mm auf, wobei bevorzugt ein Verhältnis R2/9,5 mm von etwa 0,57-0,82, bevorzugt von 0,65-0,73 vorgesehen ist.

Die im Bereich der Reifenaußenseite A vorgesehene Wulstlippe 9 steht axial außenseitig in Richtung aR über die strichliert dargestellte Kontur der Seitenwand 6 des Fahrzeugluftreifens 10 vor und ist so angeordnet, dass im unmontierten Zustand eine Überschneidung zumindest des radial außenseitigen Bereichs gegenüber dem gekrümmten Felgenhornbereich 12 auftritt, dessen Auflagefläche entlang einer Kreisbahn 14 mit dem Krümmungsradius R1 von hier 9,5 mm verläuft.

Diese Überschneidung sorgt dafür, dass im montierten Zustand gemäß Figur 2 die Wulstlippe 9 mit ihrer Wulstlippenoberfläche 13 unter Erzeugung einer Presspassung auf die Oberfläche des gekrümmten Felgenhornbereichs 12 gepresst wird und insoweit sich die Wulstlippe 9 formschlüssig an der auf der Kreisbahn 14 liegenden Oberfläche des Felgenhornbereichs 12 abstützt.

Zugleich erkennt man in den Figuren, dass benachbart zu der sich auf dem Felgenhornbereich 12 durch Auflage abstützenden Wulstlippe 9 innerhalb der Seitenwand 6 ein Außenapex 30 angeordnet ist, der sich im in der Figur 2 dargestellten montierten Zustand des Fahrzeugluftreifens 10 auf der Felge 11 von einem unterhalb der Wulstlippe 9 befindlichen Bereich bis in einen oberhalb der Wulstlippe 9 befindlichen Bereich in der Seitenwand 6 erstreckt, wenn der Fahrzeugluftreifen 10 wie in Figur 2 dargestellt in radialer Richtung rR betrachtet wird. Dies hat zur Folge, dass die Seitenwand 6 des Fahrzeugluftreifens in demjenigen Bereich der Seitenwand 6, der aus dem zwischen den Felgenhornbereichen 12 eingeschlossenen Felgenmaul austritt, durch den Außenapex 30 je nach Materialauswahl desselben in seinen Eigenschaften modifiziert wird, beispielsweise verstärkt wird. In einem solchen Fall erfährt die Seitenwand 6 in demjenigen Bereich eine Verstärkung, welcher die von der Wulstlippe 9 durch Abstützung aufgenommenen Kräfte in die Seitenwand 6 einleitet.

Zu diesem Zweck ist der Außenapex 30 aus einer Gummimischung gebildet, die eine höhere Steifigkeit als die Gummimischung aufweist, aus der die Seitenwand 6 gebildet ist. Er kann zur Erhöhung der Hysterese auch aus einer entsprechenden Gummimischung mit erhöhter Hysterese gebildet sein, um z.B. die Rollwiderstandseigenschaften des Fahrzeugluftreifens zu optimieren.

Beispielhaft ist der Außenapex 30 aus einer Gummimischung hergestellt, die eine Shore-Härte A nach ASTM D 2240 von 72,2 bei einem dynamischen E-Modul nach DIN 53513 von 10 N/mm² aufweist. Bei Raumtemperatur weist diese Gummimischung des Außenapex 30 eine Rückprallelastizität nach DIN 53512 von 73 %, eine Reißfestigkeit nach DIN 53504 von 5,5 N/mm², eine Reißdehnung nach DIN 53504 von 109 % und eine Energiedichte beim Bruch nach DIN 53504 von 2,6 J/cm³ auf. Bei einer Temperatur von 70 °C weist diese Gummimischung demgegenüber eine Rückprallelastizität nach DIN 53512 von 76,5 %, eine Reißfestigkeit nach DIN 53504 von 4,9 N/mm², eine Reißdehnung nach DIN 53504 von 98 % und eine Energiedichte beim Bruch nach DIN 53504 von 2,3 J/cm³ auf.

Die Seitenwand 6 hingegen ist aus einem Gummimaterial gebildet, welches eine Shore-Härte A nach ASTM D 2240 von 50 und einen dynamischen E-Modul nach DIN 53513 von 4,4 N/mm² aufweist und bei Raumtemperatur eine Rückprallelastizität nach DIN 53512 von 66 %, eine Reißfestigkeit nach DIN 53504 von 8,5 N/mm², eine Reißdehnung nach DIN 53504 von 470 % und bei einer Temperatur von 70 °C eine Rückprallelastizität nach DIN 53 512 von 68 % zeigt.

Zumindest in seinem radial unteren Bereich ist der Außenapex 30 zudem benachbart zu den aus Kern 7 und Apex 8 gebildeten Wulstbereich 5 angeordnet.

Der Fahrzeugluftreifen 10 erhält durch diese Ausgestaltung eine besonders hohe Steifigkeit, sodass auf zusätzliche bisher übliche Verstärkungselemente verzichtet werden kann. Trotz seiner hohen Stabilität und der beispielsweise für Anwendungen im Transporterbereich geeigneten Tragfähigkeit kann somit der dargestellte Fahrzeugluftreifen ohne zusätzliche Gewebeeinlagen zur Verstärkung der Seitenwand 6 auskommen, die sich nachteilig auf den Rollwiderstand, Komfort und die Herstellungskosten eines solchen Fahrzeugluftreifens 10 auswirken würden.

Es versteht sich, dass der vorangehend erläuterte Fahrzeugluftreifen neben Transportern auch für andere Anwendungsfälle, beispielsweise PKWs, Vans sowie Nutzfahrzeuge einschließlich Lkw geeignet ist.

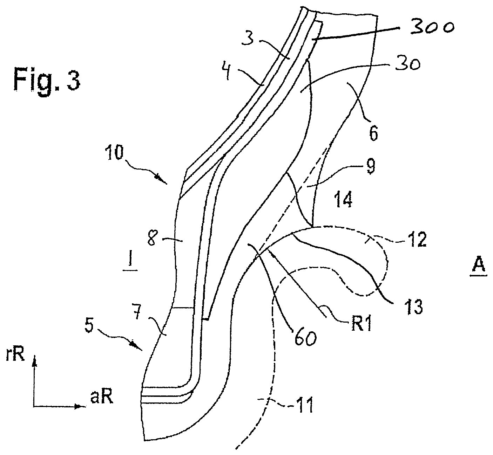

Die Figur 3 zeigt eine gegenüber dem Ausführungsbeispiel der Figur 2 abgewandelte Ausführungsform, bei der die Seitenwand 6 nicht wie in Figur 2 einteilig, sondern zweiteilig mit einem unteren sogenannten Felgenstreifen oder Rim Strip 60, der einen weiteren Teil der Seitenwand 6 bildet, ausgeführt ist. Alle übrigen Teile des Fahrzeugluftreifens 10 weisen gleiche Bezugszeichen wie in Figur 2 auf und werden zur Vermeidung von Wiederholungen nicht nochmals gesondert erläutert und bestehen auch aus den genannten Materialien.

Der eigenschaftsmodifizierende Außenapex 30 erstreckt sich in radialer Richtung rR neben dem Rim Strip 60 bis in den darüber befindlichen Bereich der Seitenwand 6. Die Karkasse 3 ist mit ihrem den Wulstbereich umschlingenden Ende 300 in radialer Richtung rR betrachtet so angeordnet, dass sie das radial äußere Ende des Apex 8 und des Außenapex 30 überragt.

Der Felgenstreifen oder Rim Strip 60 besteht aus einem Gummimaterial, welches eine Shore-Härte A nach ASTM D 2240 von 75 aufweist und bei Raumtemperatur eine Rückprallelastizität nach DIN 53512 von 56 %, eine Reißfestigkeit nach DIN 53504 von 12,3 N/mm², eine Reißdehnung nach DIN 53504 von 257 % und eine Energiedichte beim Bruch nach DIN 53504 von 7,5 J/cm³ zeigt. Bei einer Temperatur von 70 °C beträgt die Rückprallelastizität nach DIN 53 512 hingegen 48,7 %.

### Bezugszeichenliste

- 1: Laufstreifen
- 2: Gürtel
- 3: Karkasse
- 4: Innenschicht
- 5: Wulstbereich
- 6: Seitenwand
- 7: Wulstkern
- 8: Kernreiter
- 9: Wulstlippe
- 10: Fahrzeugluftreifen
- 11: Felge
- 12: Felgenhornbereich
- 13: Wulstlippenoberfläche
- 14: Kreisbogen
- 30: Außenapex
- 60: Rim Strip
- R1: Felgenhornradius
- R2: Krümmungsradius
- A: Reifenaußenseite
- I: Reifeninnenseite
- rR: radiale Richtung
- aR: axiale Richtung

## Patentansprüche

1. Fahrzeugluftreifen (10) mit einem Laufstreifen (1) und zwei in Wulstbereichen (5) endenden Seitenwänden (6) sowie einer radial unterhalb des Laufstreifens (1) und entlang der Seitenwände (6) verlaufenden und die Wulstbereiche (5) umschlingenden Karkasse (3), wobei die Wulstbereiche (5) einen Kern (7) und einen in radialer Richtung (rR) auswärts des Kerns (7) anschließenden Apex (8) umfassen und der Fahrzeugluftreifen (10) zur Montage auf eine Felge (11) mit einem gekrümmten Felgenhornbereich (12) geeignet ist, **dadurch gekennzeichnet, dass** in der Seitenwand (6) axial benachbart zum Apex (8) ein aus einem Außenapex gebildeter Außenapex (30) mit einer Shore-Härte A nach ASTM D 2240 von 60 bis 88 und einem dynamischen E-Modul nach DIN 53513 von 8 bis 12 N/mm² sowie einer Rückprallelastizität nach DIN 53512 von 60 bis 85 % bei Raumtemperatur und von 65 bis 90 % bei einer Temperatur von 70 °C angeordnet ist.

2. Fahrzeugluftreifen (10) nach Anspruch 1, **dadurch gekennzeichnet, dass** der Außenapex (30) bei Raumtemperatur eine Reißfestigkeit nach DIN 53504 von 3,5 bis 10 N/mm² und eine Reißdehnung nach DIN 53504 von 60 bis 200 % und bei einer Temperatur von 70 °C eine Reißfestigkeit nach DIN 53504 von 3 bis 8 N/mm² und eine Reißdehnung nach DIN 53504 von 45 bis 190 % aufweist.

3. Fahrzeugluftreifen (10) nach Anspruch 1 oder 2, **dadurch gekennzeichnet, dass** der Außenapex (30) bei Raumtemperatur eine Energiedichte beim Bruch nach DIN 53504 von 1,5 bis 5 J/cm³ und bei einer Temperatur von 70 °C eine Energiedichte beim Bruch nach DIN 53504 von 1 bis 5 J/cm³ aufweist.

4. Fahrzeugluftreifen (10) nach einem der Ansprüche 1 bis 3, **dadurch gekennzeichnet, dass** der Außenapex (30) in montiertem Zustand des Fahrzeugluftreifens (10) auf der Felge (11) zumindest teilweise in radialer Richtung (rR) oberhalb des Felgenhornbereichs (12) in der Seitenwand (6) angeordnet ist.

5. Fahrzeugluftreifen (10) nach einem der Ansprüche 1 bis 4, **dadurch gekennzeichnet, dass** die Seitenwände (6) aus einem Gummimaterial mit einer Shore-Härte A nach ASTM D 2240 von 40 bis 60 und einem dynamischen E-Modul von 3 bis 6 N/mm² sowie einer Rückprallelastizität nach DIN 53512 von 45 bis 75 % bei Raumtemperatur und einer Reißfestigkeit nach DIN 53504 von 6 bis 15 N/mm² und eine Reißdehnung nach DIN 53504 von 400 bis 600 % gebildet sind.

6. Fahrzeugluftreifen (10) nach einem der Ansprüche 1 bis 5, **dadurch gekennzeichnet, dass** in radialer Richtung (rR) unterhalb des Wulstbereiches (5) und der Felge (11) zugewandt ein in die Seitenwand (6) übergehender Felgenstreifen (60) vorgesehen ist, der aus einem Gummimaterial mit einer Shore-Härte A nach ASTM D 2240 von 65 bis 85 und einer Rückprallelastizität nach DIN 53512 von 34 bis 65 % bei Raumtemperatur und 50 bis 70 % bei einer Temperatur von 70 °C sowie einer Reißfestigkeit nach DIN 53504 von 10 bis 16 N/mm² und eine Reißdehnung nach DIN 53504 von 160 bis 275 % gebildet ist.

7. Fahrzeugluftreifen nach einem der Ansprüche 1 bis 6, **dadurch gekennzeichnet, dass** die Karkasse (3) mit ihrem den Wulstbereich (5) umschlingenden Ende (300) in radialer Richtung (rR) des Fahrzeugluftreifens (10) das radial äußere Ende des Apex (8) und des Außenapex (30) überragt.

8. Fahrzeugluftreifen nach einem der Ansprüche 1 bis 7, **dadurch gekennzeichnet, dass** axial außenseitig zumindest auf einer Seitenwand (6) und/oder dem Felgenstreifen (60) eine über den Umfang derselben vorstehende und umlaufende Wulstlippe (9) ausgebildet ist, die eine Wulstlippenoberfläche (13) aufweist, welche in montiertem Zustand des Fahrzeugluftreifens (10) auf der Felge (11) zur Auflage auf dem gekrümmten Felgenhornbereich (12) bestimmt ist.

9. Fahrzeugluftreifen (10) nach Anspruch 8, **dadurch gekennzeichnet, dass** sich in radialer Richtung (rR) des Fahrzeugluftreifens (10) betrachtet der Außenapex (30) von einem unterhalb der Wulstlippe (9) befindlichen Bereich bis in einen oberhalb der Wulstlippe (9) befindlichen Bereich entlang der Seitenwand (6) und/oder des Felgenstreifens (60) erstreckt.

10. Fahrzeugrad mit einem auf einer Felge (11) montierten Fahrzeugluftreifen (10) gemäß einem der vorangehenden Ansprüche.

## Claims

1. Pneumatic vehicle tyre (10) having a tread (1), and having two side walls (6) which end in bead regions (5), and also having a carcass (3) which extends radially below the tread (1) and along the side walls (6) and wraps around the bead regions (5), wherein the bead regions (5) comprise a core (7) and an apex (8) adjoining outwards of the core (7) in a radial direction (rR), and the pneumatic vehicle tyre (10) is suitable for fitting onto a rim (11) with a curved rim flange region (12), **characterized in that** an outer apex (30) formed from an outer apex and having a Shore hardness A according to ASTM D 2240 of 60 to 88 and a dynamic modulus of elasticity according to DIN 53513 of 8 to 12 N/mm² as well as a rebound resilience according to DIN 53512 of 60 to 85% at room temperature and of 65 to 90% at a temperature of 70°C is arranged in the side wall (6), axially adjacent to the apex (8).

2. Pneumatic vehicle tyre (10) according to Claim 1, **characterized in that** the outer apex (30) has at room temperature a tensile strength at break according to DIN 53504 of 3.5 to 10 N/mm² and an elongation at break according to DIN 53504 of 60 to 200% and has at a temperature of 70°C a tensile strength at break according to DIN 53504 of 3 to 8 N/mm² and an elongation at break according to DIN 53504 of 45 to 190%.

3. Pneumatic vehicle tyre (10) according to Claim 1 or 2, **characterized in that** the outer apex (30) has at room temperature an energy density at break according to DIN 53504 of 1.5 to 5 J/cm³ and at a temperature of 70°C an energy density at break according to DIN 53504 of 1 to 5 J/cm³.

4. Pneumatic vehicle tyre (10) according to one of Claims 1 to 3, **characterized in that**, in the fitted state of the pneumatic vehicle tyre (10) on the rim (11), the outer apex (30) is arranged in the side wall (6) at least partially above the rim flange region (12) in the radial direction (rR).

5. Pneumatic vehicle tyre (10) according to one of Claims 1 to 4, **characterized in that** the side walls (6) are formed from a rubber material having a Shore hardness A according to ASTM D 2240 of 40 to 60 and a dynamic modulus of elasticity of 3 to 6 N/mm² as well as a rebound resilience according to DIN 53512 of 45 to 75% at room temperature and a tensile strength at break according to DIN 53504 of 6 to 15 N/mm² and an elongation at break according to DIN 53504 of 400 to 600%.

6. Pneumatic vehicle tyre (10) according to one of Claims 1 to 5, **characterized in that** provision is made below the bead region (5) in the radial direction (rR) and close to the rim (11) of a rim strip (60), which transitions into the side wall (6) and is formed from a rubber material having a Shore hardness A according to ASTM D 2240 of 65 to 85 and a rebound resilience according to DIN 53512 of 34 to 65% at room temperature and 50 to 70% at a temperature of 70°C as well as a tensile strength at break according to DIN 53504 of 10 to 16 N/mm² and an elongation at break according to DIN 53504 of 160 to 275%.

7. Pneumatic vehicle tyre according to one of Claims 1 to 6, **characterized in that** the carcass (3) projects beyond the radially outer end of the apex (8) and of the outer apex (30) in the radial direction (rR) of the pneumatic vehicle tyre (10) at its end (300) which wraps around the bead region (5).

8. Pneumatic vehicle tyre according to one of Claims 1 to 7, **characterized in that**, axially on the outside at least of a side wall (6) and/or of the rim strip (60), there is formed a bead lip (9) which encircles and projects beyond the circumference thereof and which has a bead-lip surface (13) which, in the fitted state of the pneumatic vehicle tyre (10) on the rim (11), is intended for abutment on the curved rim flange region (12).

9. Pneumatic vehicle tyre (10) according to Claim 8, **characterized in that**, when viewed in the radial direction (rR) of the pneumatic vehicle tyre (10), the outer apex (30) extends, along the side wall (6) and/or the rim strip (60), from a region situated below the bead lip (9) into a region situated above the bead lip (9).

10. Vehicle wheel having a pneumatic vehicle tyre (10) according to one of the preceding claims that is fitted on a rim (11).

## Revendications

1. Bandage pneumatique de véhicule (10), comprenant une bande de roulement (1) et deux flancs (6) se terminant dans des zones de talon (5), ainsi qu'une carcasse (3) qui suit un tracé radial en dessous de la bande de roulement (1) et le long des flancs (6) et enveloppe les zones de talon (5), les zones de talon (5) comprenant un noyau (7) et un sommet (8) se raccordant dans la direction radiale (rR) à l'extérieur du noyau (7), et le bandage pneumatique de véhicule (10) étant adapté au montage sur une jante (11) ayant une zone de talon de jante courbée (12), **caractérisé en ce qu'**un sommet extérieur (30) formé à partir d'un sommet extérieur et ayant une dureté Shore A selon ASTM D 2240 de 60 à 88 et un module d'élasticité dynamique selon DIN 53513 de 8 à 12 N/mm² ainsi qu'une élasticité de rebond selon DIN 53512 de 60 à 85 % à température ambiante et de 65 à 90 % à une température de 70 °C est disposé dans le flanc (6) axialement adjacent au sommet (8).

2. Bandage pneumatique de véhicule (10) selon la revendication 1, **caractérisé en ce que** le sommet extérieur (30) présente, à température ambiante, une résistance à la rupture selon DIN 53504 de 3,5 à 10 N/mm² et un allongement à la rupture selon DIN 53504 de 60 à 200 %, et à une température de 70 °C, une résistance à la rupture selon DIN 53504 de 3 à 8 N/mm² et un allongement à la rupture selon DIN 53504 de 45 à 190 %.

3. Bandage pneumatique de véhicule (10) selon la revendication 1 ou 2, **caractérisé en ce que** le sommet extérieur (30) présente, à température ambiante, une densité d'énergie à la rupture selon DIN 53504 de 1,5 à 5 J/cm³ et, à une température de 70 °C, une densité d'énergie à la rupture selon DIN 53504 de 1 à 5 J/cm³.

4. Bandage pneumatique de véhicule (10) selon l'une des revendications 1 à 3, **caractérisé en ce que**, lorsque le bandage pneumatique de véhicule (10) est monté sur la jante (11), le sommet extérieur (30) est disposé au moins en partie dans la direction radiale (rR) au-dessus de la zone du talon de jante (12) dans le flanc (6).

5. Bandage pneumatique de véhicule (10) selon l'une des revendications 1 à 4, **caractérisé en ce que** les flancs (6) sont constitués d'un matériau en caoutchouc ayant une dureté Shore A selon ASTM D 2240 de 40 à 60 et un module d'élasticité dynamique de 3 à 6 N/mm² ainsi qu'une élasticité de rebond selon DIN 53512 de 45 et 75 % à température ambiante et une résistance à la rupture selon DIN 53504 de 6 à 15 N/mm² et un allongement à la rupture selon DIN 53504 de 400 à 600 %.

6. Bandage pneumatique de véhicule (10) selon l'une des revendications 1 à 5, **caractérisé en ce qu'**une bande de jante (60) se prolongeant dans le flanc (6) est prévue dans la direction radiale (rR) en dessous de la zone du talon (5) et faisant face à la jante (11), laquelle est constituée d'un matériau en caoutchouc ayant une dureté Shore A selon ASTM D 2240 de 65 à 85 et une élasticité de rebond selon DIN 53512 de 34 à 65 % à température ambiante et de 50 à 70 % à une température de 70 °C, ainsi qu'une résistance à la rupture selon DIN 53504 de 10 à 16 N/mm² et un allongement à la rupture selon DIN 53504 de 160 à 275 %.

7. Bandage pneumatique de véhicule selon l'une des revendications 1 à 6, **caractérisé en ce que** la carcasse (3), avec son extrémité (300) qui enveloppe la zone du talon (5), dépasse, dans la direction radiale (rR) du bandage pneumatique de véhicule (10), l'extrémité radialement extérieure du sommet (8) et du sommet extérieur (30).

8. Bandage pneumatique de véhicule selon l'une des revendications 1 à 7, **caractérisé en ce qu'**une lèvre de talon (9) est formée axialement du côté extérieur au moins sur un flanc (6) et/ou la bande de jante (60), faisant saillie au-dessus de la périphérie de celle-ci et de manière circonférentielle, laquelle possède une surface de lèvre de talon (13) qui, à l'état monté du bandage pneumatique de véhicule (10) sur la jante (11), est destinée à reposer sur la zone du talon de jante (12) courbée.

9. Bandage pneumatique de véhicule (10) selon la revendication 8, **caractérisé en ce que**, vu dans la direction radiale (rR) du bandage pneumatique de véhicule (10), le sommet extérieur (30) s'étend depuis une zone située en dessous de la lèvre de talon (9) jusqu'à une zone située au-dessus de la lèvre de talon (9) le long du flanc (6) et/ou de la bande de jante (60).

10. Roue de véhicule comprenant un bandage pneumatique de véhicule (10) monté sur une jante (11) selon l'une des revendications précédentes.
